# EUROPÄISCHE PATENTANMELDUNG

(11) **EP 1 854 924 A1**
(43) Veröffentlichungstag der Anmeldung: **14.11.2007**
(21) Anmeldenummer: 06090070.1
(22) Anmeldetag: 08.05.2006
(51) Int. Cl.: E02B 3/12, B09B 1/00

(54) **Vorrichtung geeignet zum Befestigen einer Plane auf einem Untergrund**

(71) Anmelder: Wagenhuber, Walter, D-22391 Hamburg (DE)
(72) Erfinder: Wagenhuber, Walter, D-22391 Hamburg (DE)
(74) Vertreter: Wenzel & Kalkoff

(57) **Zusammenfassung**

Eine Einrichtung zum abdichtenden Befestigen einer Abdeckplane (5) an flächigem Verankerungsgrund (6) längs einer dichtenden Befestigungsstrecke (11) weist eine an dem Verankerungsgrund (6) unter Erzeugung von Klemmkraft festsetzbare Klemmeinrichtung (1) auf. Diese ist durch ein elastisches Anpressmittel (3) und ein demgegenüber steifes Klemmmittel (2) zum Befestigen der Abdeckplane (5) an dem Verankerungsgrund (6) längs der Befestigungsstrecke gebildet. Wenigstens ein Element (21) des Klemmmittels (2) ist derart angeordnet und mit einem Anpressteil (31) des elastischen Anpressmittels (3) zusammengefügt, dass die zu befestigende Abdeckpane (5) längs der Befestigungsstrecke (11) im Klemmzustand der Einrichtung (1) zwischen das elastische Anpressteil (31) und den Verankerungsgrund (6) gepresst wird.

## Beschreibung

Die Erfindung betrifft eine Einrichtung zum abdichtenden Befestigen einer Abdeckplane an flächigem Verankerungsgrund längs einer dichtenden Befestigungsstrecke, umfassend eine an dem Verankerungsgrund unter Erzeugung von Klemmkraft festsetzbare Klemmeinrichtung, die ein elastisches Anpressmittel und ein demgegenüber steifes Klemmmittel zum Befestigen der Abdeckplane an dem Verankerungsgrund längs der Befestigungsstrecke aufweist. Es handelt sich um Planen, mit denen Landbodenflächen, Halden oder andere großflächig zu schützende Objekte abgedeckt werden. Derartige Planen, auch in Form von Bahnen oder Folien, müssen in der Anwendung besonderen Belastungen widerstehen, die zum Beispiel durch Wind und Regen, aber auch durch Begehen entstehen. Auch durch das Gewicht von Planen entsteht insbesondere beim Auslegen derselben besondere Beanspruchung. Dichtungsplanen für Hochwasserschutzsysteme sind durch auf sie einwirkendes bewegtes Wasser besonderer Belastung ausgesetzt. Die Planen müssen in besonderem Maße am Verankerungsgrund, nämlich einer festen Landfläche oder einer Wand sicher fixiert werden. Die Planen müssen, zumeist längs wenigstens eines Randbereichs, nicht nur sicher und dicht an der Verankerungsfläche angebracht werden, sondern das Befestigen soll auch besonders schnell und einfach vonstattengehen, und auch das Lösen der Befestigung zum Abnehmen der Planen soll gleichermaßen einfach sein.

Aus DE 19507810 ist eine Befestigungseinrichtung für Planenabdeckungen bekannt, in der eine Plane zwischen ein schienenförmiges Klemmelement und einen mit ausreichendem Druck beaufschlagbaren flexiblen Schlauch eingespannt wird. Zwischen Ankergrund und Plane erreicht man eine gute Dichtung, wenn auf das Klemmelement aufgesetzte Klemmstützen in Schraubverbindung an dem Verankerungsgrund befestigt werden. Die Plane muss mit Randsaum versehen sein und zudem im zu befestigenden Randbereich über den Schlauch mit dem Klemmelement gestülpt werden. Dies erfordert eine Reihe von Handhabungsmaßnahmen, die einer einfachen und schnellen Befestigungsmontage entgegenstehen. Die Plane wird an Kanten des Klemmelements umgeknickt, so dass bei insbesondere wechselnder Zugbeanspruchung der Plane längs der Befestigungsstelle Verschleiß und sogar Aufreißen und Abreißen der Plane von dem Klemmelement die Folge sind.

Demgegenüber liegt der Erfindung das Ziel zugrunde, eine Befestigungs-Klemmeinrichtung vorzusehen, die längs der Befestigungsstelle bzw. -strecke nicht nur zuverlässig und einfach auch an unregelmäßigem, wechselnde Vertiefungen aufweisendem Grund abdichtet und fixiert, sondern auch besonders einfach ausgeführt sowie schnell und bequem zur Montage und Demontage handhabbar ist.

Das Ziel der Erfindung wird in Verbindung mit den Merkmalen der eingangs genannten Einrichtung dadurch erreicht, dass wenigstens ein Element des Klemmmittels derart angeordnet und mit einem Anpressteil des elastischen Anpressmittels zusammengefügt ist, dass die zu befestigende Abdeckplane längs der Befestigungsstrecke im Klemmzustand der Einrichtung zwischen das elastische Anpressteil und den Verankerungsgrund gepresst wird. Mit der erfindungsgemäßen Ausbildung und Anordnung erreicht man, dass die Abdeckplane längs ihrer Befestigungsstelle auf der Verankerungsfläche aufliegt, wobei sie durch das elastische Anpressteil unmittelbar gegen den Verankerungsgrund gepresst wird. Es ist gefunden worden, dass die abdichtend zu befestigenden Planen der bezeichneten Art im Zusammenwirken mit dem elastischen Anpressteil ausreichend flächenverformbar sind, um im Klemmzustand der Einrichtung in Vertiefungen zur dichtenden Anlage an den Grund hineingedrückt zu werden. Dadurch, dass das Anpressteil zwischen der dem Grund abgewandten Oberseite der Plane und dem Klemmmittel zu liegen kommt, baut die Einrichtung einfach, und sie ist zudem einfach zu montieren. Das elastische Anpressmittel bildet aufgrund und nach Maßgabe seiner Elastizität einen Klemmkraft erzeugenden Federspeicher, und zwar ohne, dass der zu befestigende Bereich der Plane auf den Federspeicher einwirkt.

Vorteilhaft weist das Klemmmittel wenigstens einen mit dem Klemmelement zusammenwirkenden Klemm-Niederhalter mit einem Klemmabschnitt auf, der im Klemmzustand der Einrichtung das Klemmelement mit wenigstens einem Teil des elastischen Anpressmittels zwischen sich und der Abdeckplane bzw. dem Verankerungsgrund einklemmt. Zweckmäßig werden solche Niederhalter in einem Abstand von 1 bis 2 m vorgesehen. Eine besonders zweckmäßige Ausführung des Niederhalters besteht darin, dass er eine quer zur Befestigungsstrecke gerichtete Klemmbrücke aufweist, an der wenigstens ein Durchgangsloch zur Aufnahme eines an dem Verankerungsgrund befestigbaren Stiftelements ausgebildet ist. Eine bevorzugte und zur Montage besonders einfache Gestaltung besteht darin, dass zwischen der Klemmbrücke und einem Befestigungsstift eine Schiebe-Verkeilungsverbindung eingerichtet ist, die beim Herstellen des Klemmzustandes gegen federelastische Rückstellkraft des Materials des elastischen Anpressmittels in eine den Klemmzustand aufrechterhaltende Verankerungsverbindung setzbar ist.

Aufgrund der erfindungsgemäßen Struktur der Klemmeinrichtung kann das mit dem elastischen Anpressteil zusammengefügte Klemmelement besonders vorteilhaft mit dem elastischen Anpressmittel unverlierbar zu einer Anpresseinheit zusammengefügt werden, die schnell und einfach auf der zu befestigenden Plane auslegbar ist. In dieser Gestaltung ist das mit dem elastischen Anpressteil zusammengefügte Klemmelement zweckmäßig durch ein entsprechend der Befestigungsstrecke sich erstreckendes Tragprofil gebildet, das das elastische Anpressmittel trägt und mit diesem zusammen in einzelner oder mehrfacher Anordnung die Anpresseinheit bildet.

Das die Abdeckplane unmittelbar gegen den Verankerungsgrund pressende elastische Anpressmittel wird zweckmäßig durch ein Mantelteil gebildet, das das Tragprofil längs desselben vorzugsweise vollständig ummantelt. Zweckmäßig wird das Hülsen-Mantelteil durch ein Hohlprofil vorzugsweise mit Kreisquerschnitt gebildet. In ein solches Mantelteil wird vorzugsweise ein Tragprofil in Form eines Tragrohres zweckmäßig mit Kreisquerschnitt eingefügt.

Wenngleich es besonders vorteilhaft ist, dass zwischen einem bzw. mehreren Klemm-Niederhaltern und dem Tragprofil ein Teil des elastischen Anpressmittels vorgesehen ist, besteht eine andere vorteilhafte Ausführung darin, dass das Klemmmittel wenigstens einen Niederhalter mit einer quer zur Befestigungsstrecke gerichteten Klemmbrücke aufweist und dass der Niederhalter zum Herstellen des Klemmzustandes der Einrichtung unmittelbar mit dem Tragprofil in gelenkigen und festklemmbaren, vorzugsweise durch ein Kugelgelenk gebildeten Eingriff gelangt. Zweckmäßig ist das Tragprofil durch ein U-Profil gebildet, das wenigstens an der Außenseite seines Stegteils das elastische Anpressmittel trägt, wobei zum Ausbilden des Kugelgelenks zwischen den Schenkelteilen des U-Profils eine Kugelaufnahme für eine Gelenkkugel eingerichtet ist, die vorzugsweise an dem Niederhalter befestigt ist.

Das Anpressmittel besteht zweckmäßig aus einem weich-elastischen Material, vorzugsweise Moosgummi oder dergleichen Material. Bevorzugt wird ein geschlossen-zelliges Kunst-/Schaumstoffmaterial verwendet, damit das Anpressmittel keine Feuchtigkeit aufnimmt.

Die erfindungsgemäße Einrichtung ist in besonderer Weise zum abdichtenden Befestigen einer Dichtungsplane für eine Hochwasserschutzeinrichtung geeignet und ausgebildet. In dieser Ausbildung weist die Einrichtung eine Mehrzahl Klemmeinrichtungen auf, die längs einer dichtenden Befestigungsstrecke in wenigstens einer Reihe angeordnet sind. Als besonders wirksam und auch hinsichtlich der Anbringung einfach hat sich eine Anordnung herausgestellt, in der die Klemmeinrichtungen zweckmäßig mit Überlappung in zwei vorzugsweise parallelen Reihen angeordnet sind. Vorzugsweise weisen die Klemmeinrichtungen eine Befestigungslänge von 0,5 bis 5 m und weiter bevorzugt von etwa 2 m auf.

Eine Dichtungsplane für eine Hochwasserschutzeinrichtung, insbesondere zum Überdecken von Deichelementen wie Sandsäcken oder gefüllten Schläuchen zum Aufbau eines Behelfs-/Notdeiches längs einer Hochwasserlinie, wird in vielen Fällen nicht nur längs des Deiches am Boden, sondern auch an zum Deich senkrechten, ihn endseitig begrenzenden Wänden befestigt. Um die Plane dann auch in den Eckbereichen zwischen Boden und Wand dichtend zu fixieren, kann dort zweckmäßig wenigstens eine Klemmeinrichtung vorgesehen werden, bei der das elastische Anpressmittel an wenigstens einem stirnseitigen Ende der Klemmeinrichtung über das wenigstens eine Element des Klemmmittels hervorsteht. Zusätzlich oder statt dessen kann vorteilhaft wenigstens eine Klemmeinrichtung als Eckstück zum Verbinden von zwei Klemmeinrichtungen über Eck ausgebildet sein. Ein solches Eckstück ist zweckmäßig ein 90°-Winkel-Profilstück in Form eines abgewinkelten Rohres, eines U-Stückes oder eines anderen Profils, an das das elastische Anpressmittel angesetzt ist.

Zweckmäßig werden Anpresseinheiten von wenigstens zwei insbesondere in einem Eckbereich anzuordnenden Klemmeinrichtungen mit Aufnahmemittel und Steckmittel zum Herstellen einer Steckverbindung ausgebildet.

Unteransprüche sind auf die genannten und noch andere zweckmäßige und vorteilhafte Ausgestaltungen der Erfindung gerichtet. Besonders zweckmäßige Ausbildungsformen oder -möglichkeiten der Erfindung werden anhand der folgenden Beschreibung der in der schematischen Zeichnung dargestellten Ausführungsbeispiele näher beschrieben. Es zeigen
- Fig. 1: in axonometrischer Teilansicht eine erfindungsgemäße Klemmeinrichtung mit einem durch eine Schaumstoff-Ummantelung gebildeten Anpressmittel in Verbindung mit durch Verkeilungsverbindung festgeklemmtem Niederhalter,
- Fig. 2: in axonometrischer Teilansicht eine erfindungsgemäße Klemmeinrichtung mit einem durch eine Schaumstoff-Ummantelung gebildeten Anpressmittel und einem Klemm-Niederhalter zur Nagelbefestigung,
- Fig. 3: in axonometrischer Teilansicht eine erfindungsgemäße Klemmeinrichtung mit an ein U-Profil angesetztem Anpressmittel und über eine Kugel mit dem U-Profil verbundenem Niederhalter,
- Fig. 4: in Draufsicht eine erfindungsgemäße Einrichtung mit mehreren Klemmeinrichtungen längs einer abzudichtenden und zu fixierenden Strecke am Randbereich einer Dichtungsplane für eine Hochwasserschutzeinrichtung und
- Fig. 5, 6 und 7: Klemmeinrichtungen mit in Steckverbindung zusammenfügbaren Anpresseinheiten.

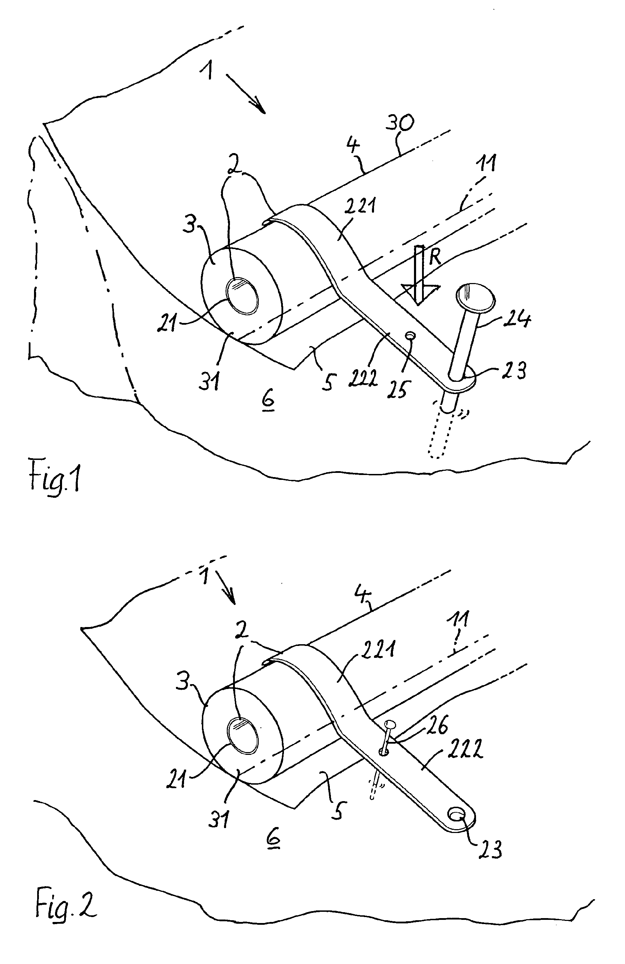

Gemäß Fig. 1 umfasst eine erfindungsgemäße Klemmeinrichtung 1 ein elastisches Anpressmittel 3 und ein demgegenüber steifes Klemmmittel 2. Das Klemmmittel 2 weist ein Klemmelement in Form eines Stahlrohres 21 sowie Niederhalter 22 mit Befestigungsstiften 24 auf. Das Stahlrohr 21 bildet ein Tragprofil, auf das eine Hülse 30 aus Schaumstoff mit dem Stahlrohr 21 entsprechender Länge aufgezogen ist. Dabei ist das Stahlrohr 21 unverlierbar in den Hohlraum der Hülse 30 mit entsprechendem Querschnitt eingefügt. Der Wandring der Kreisquerschnitt aufweisenden Hülse ummantelt den Stahlrohrkern vollständig und bildet das Anpressmittel 3.

Die Hülse 30 besteht zweckmäßig aus einem weich-elastischen Zellkunststoff, z. B. aus Moosgummi. Der Stahlrohrkern und die Hülsen-Ummantelung bilden eine Anpresseinheit 4. Diese weist z. B. eine Länge von 2 m auf. Im Bereich der stirnseitigen Enden ist jeweils der Niederhalter 22 angeordnet. In Fig. 1 ist die Klemmeinrichtung 1 im Bereich der einen Stirnseite mit dem Niederhalter 22 dargestellt.

Eine Abdeckplane 5 liegt in ihrem Randbereich längs einer Befestigungsstrecke 11 auf einer befestigten Landfläche auf, die einen Verankerungsboden 6 bildet. Längs der Befestigungsstrecke 11 wird die Anpresseinheit 4 mittels der beiden Niederhalter 22 gegen die Bodenfläche gepresst und dabei an diesem Untergrund fixiert.

Der Niederhalter 21 ist durch einen Klammerbügel mit einem Klemmabschnitt 221 in Form einer einseitigen Schelle und mit einer quer zur Befestigungsstrecke 11 gerichteten Klemmbrücke 222 ausgebildet. Der Klemmabschnitt 221 liegt mit konkav geformter Klemmbacke auf der Anpresseinheit 4 auf. Der Klemmabschnitt weist im nicht angepressten Zustand einen größeren Radius als die entspannte Anpresshülse auf, um die Anbringung zu begünstigen. Am freien Ende der in von der Plane 5 freien Bodenbereich ragenden Klemmbrücke 222 ist ein Durchgangsloch 23 ausgebildet. Dieses nimmt das Stiftelement 24 in Form einer in den Verankerungsgrund 6 eingetriebenen, dort verankerten Stahlstange auf. Solche Stahlstangen werden mit einem Hammer in den Boden geschlagen, sie können aber auch in z. B. in Beton oder Asphalt vorgefertigte Löcher gesteckt sein.

Die Einrichtung 1 wird sehr einfach dadurch in ihren Klemmzustand versetzt, dass die Klemmbrücken 222 gegen die elastische Feder-Rückstellkraft des Schaummaterials des Anpressmittels 3 in Richtung R nach unten gedrückt werden, wobei sie mit den Löchern 23 zunächst auf den Stahlstangen 24 gleiten bzw. schiebebewegbar sind und dann in Verkeilungsverbindung mit den Stahlstangen 24 gelangen. Dadurch ist eine den Klemmzustand aufrechterhaltende Verankerungsverbindung hergestellt. Mittels dieser Art der Klemmverbindung können sehr hohe Klemmkräfte aufgebracht werden. Dabei bildet die Anpresshülse mit ihrem auf der Plane 5 aufliegenden Mantelteil ein Anpressteil 31, das mit der flächenverformbaren Plane 5 derart zusammenwirkt, dass die Plane 5 zuverlässig an Bodenunebenheiten angepasst bzw. in Bodenvertiefungen hineingedrückt wird, um sie nicht nur am Boden zu befestigen, sondern auch eine besonders gute Abdichtung längs der Befestigungsstelle 11 herzustellen. Das Stahlrohr-Trägerprofil 21 verteilt den Anpressdruck über die Länge der Anpresseinheit 4, und das Anpressmittel 3 sorgt insbesondere auch mit dem zwischen dem Stahlrohrkern und den Klemmabschnitten 221 geklemmten Schaumstoffmaterial für Klemmvorspannung.

Der Niederhalter 22 ist in seinem Brückenabschnitt 222 auch mit einem Loch 25 zur Aufnahme eines Nagels 26 versehen, wie dies in Fig. 2 dargestellt ist. Bei Bedarf kann die Keilverbindung zusätzlich mit der Anbringung eines solchen Nagels geeigneter Länge und Stärke gesichert werden. Eine oder mehrere derartige Nagelverbindungen können aber auch vorgesehen werden, um die Anpresseinheit 4 an Stelle der Klemm-Keilverbindung zusammen mit der Plane 5 zwischen Boden 6 und Niederhalter 22 einzuklemmen. Für eine solche Ausführung eignen sich Nägel, die in Fugen zwischen Pflastersteinen oder in einen ähnlichen geeigneten Grund eingeschlagen werden können. An Stelle der Keil- und/oder Nagelverbindung kann auch eine Schraubverbindung vorgesehen werden. Der Keilverbindung wird aber Vorzug gegeben, da sie in Verbindung mit der elastischen Klemmkraft des Anpressmittels besonders einfach und wirksam ist.

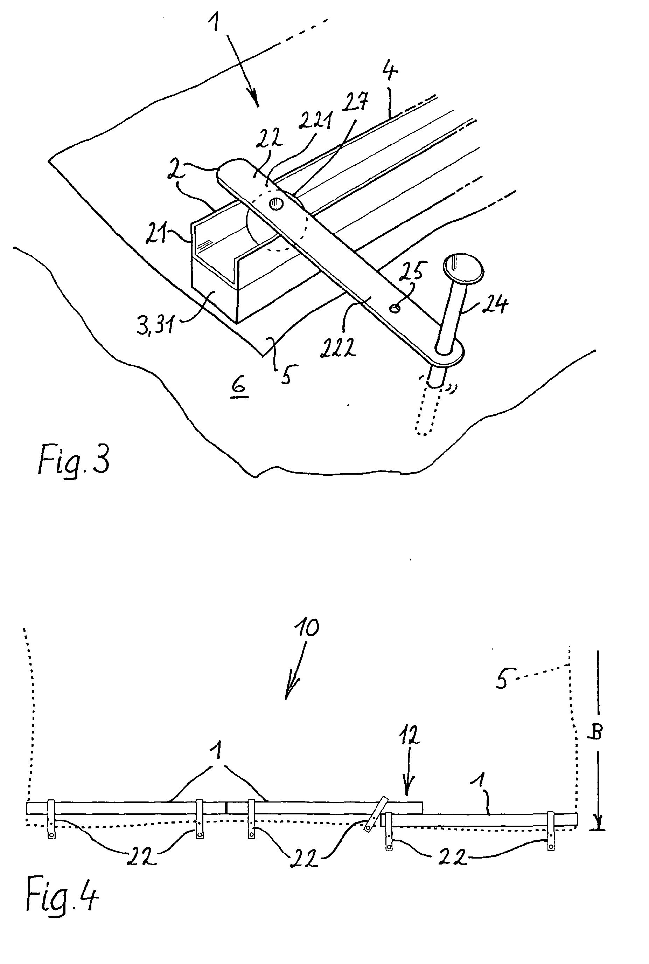

Bei der Plane 5 handelt es sich zur besonderen Anwendung und Ausführung der erfindungsgemäßen Einrichtung um eine wasserdichte Plane, die zumeist aus Polyestergewebe in Verbindung mit PVC (Polyvinylchlorid) hergestellt wird. Eine solche Plane 5 wird genutzt, um Behelfs-/Notdeiche zu errichten oder vorhandene Deiche zum Schutz gegen Hochwasser zu sichern. Wie in Fig. 4 dargestellt, wird die Plane 5 längs ihres einen Randes auf der Wasserseite eines Deiches mit mehreren Klemmeinrichtungen 1 abdichtend befestigt. Die Plane 5, die zum Beispiel eine Breite B von 6 m aufweist, wird über eine in Fig. 1 strichpunktiert angedeutete Deichfüllung, z. B. bestehend aus einer Anordnung von wassergefüllten Schläuchen, gehoben und gelegt. Die aus Fig. 4 ersichtliche erfindungsgemäße Einrichtung 10 weist Klemmeinrichtungen 1 auf, die mit Überlappung 12 in zwei parallelen Reihen angeordnet sind. Man erkennt, dass gleiche Niederhalter 22 vorgesehen sind, so dass nur ein Typ Niederhalter bereitzuhalten ist. Ein besonderer Vorteil des elastischen Anpressmittels 3 im Bereich zwischen dem Stahlrohr 21 und dem Niederhalter-Klemmabschnitt 221 besteht darin, dass der Niederhalter 2 in relativ großem Winkelbereich an die Hülse ansetzbar und anpressbar ist. Dadurch können variierende Abstände zwischen der Anpresseinheit 4 und Boden-Befestigungslöchem bzw. Befestigungsstahlstiften 24 auf sehr einfache Weise ausgeglichen werden. Die Linie der Boden-Befestigungslöcher kann erheblich von der Linie der Befestigungsstrecke 11 abweichen. Die Plane kann z. B. eine Länge von 20 m aufweisen, so dass dann statt der drei Klemmeinrichtungen 1 in Fig. 4 eine entsprechende Anzahl mit einer Länge von z. B. 2 m vorgesehen wird, wobei die Anordnung mehrfach mit einer Überlappung 12 ausgeführt werden kann.

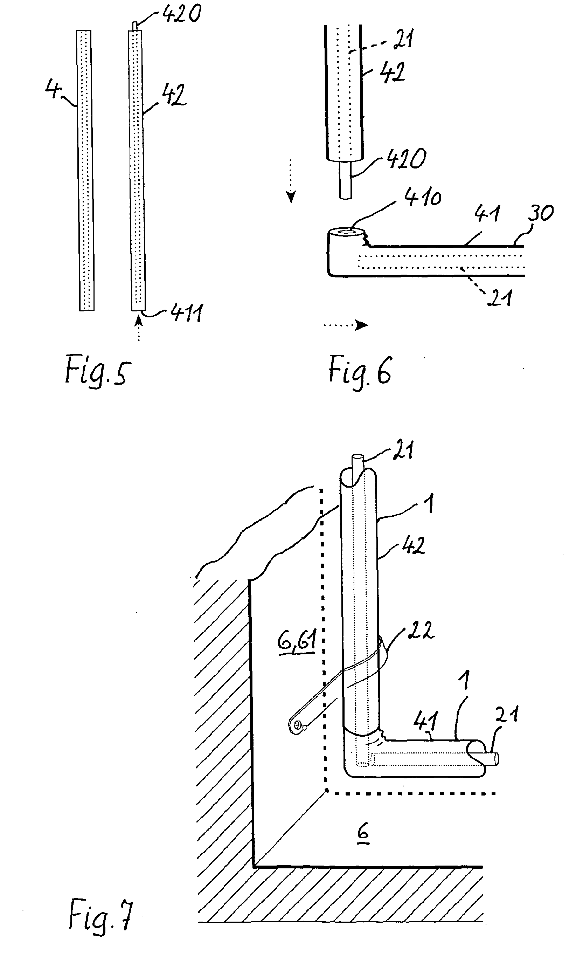

Häufig muss die Dichtungsplane auch an vertikaler Wand 61 befestigt werden, wie in Fig. 7 dargestellt. Solche Wände 61 sind quer zum Deichverlauf gerichtet, und zwischen ihnen erstreckt sich ein Deich. Erfindungsgemäß wird die Einrichtung für einen solchen Fall mit einer Eck-Klemmeinrichtung mit Anpresseinheit 41 ausgestattet, die zwei Klemmeinrichtungen übereck verbindet. Wie aus Fig. 6 ersichtlich, ist die Anpresseinheit 41, in einer Ausführung mit Anpresshülse 30 entsprechend Fig. 1 und 2, an einem Ende mit einer Steck-Aufnahme 410 ausgestattet. Die Aufnahme 410 ist aus dem Material der Schaumstoffhülse geformt und mit dieser ausgebildet, wobei sie um 90° gegenüber der Längsrichtung abgewinkelt ist. Eine vertikale Klemmeinrichtung an der Wand 61 weist eine Anpresseinheit 42 mit an einem Ende hervorstehendem Tragelement 21 auf, das ein Steckelement 420 zum Steckeingriff in die Aufnahme 410 bildet. Wie aus Fig. 5 ersichtlich, kann eine solche Anpresseinheit 42 zweckmäßig an ihrem anderen Ende mit einer Steckaufnahme 411 für ein Steckelement 420 einer entsprechenden Anpresseinheit ausgebildet sein. In einer anderen Ausführung ist auch eine nicht dargestellte Anpresseinheit mit einem zweckmäßig um 90° abgewinkelten Tragprofil denkbar, das wenigstens teilweise in elastisches Schaumstoffmaterial eines Anpressmittels eingebettet wird. In jedem Fall wird erreicht, dass das Anpressmittel auch im Eckbereich durchgehend dichtet und befestigt wird. Das Anpressmittel 3 kann an wenigstens einer Stirnseite der Anpresseinheit 4 gegenüber dem Tragelement 21 vorspringen, um, insoweit auch ohne Winkel-Eckstück, einen dichtenden Anschlag gegen eine Wand herzustellen.

Im Ausführungsbeispiel der Fig. 3 weist eine Anpresseinheit 4 einer erfindungsgemäßen Klemmeinrichtung 1 ein Zwei-Komponenten-Profil auf. Ein Klemmelement ist durch ein Rechteck-U-Profil 21 gebildet, das nach oben offen ist. An der Außen-/Rückseite des U-Stegs ist das Anpressmittel 3, das einen Anpressabschnitt 31 bildet, angefügt. Die Befestigung kann durch Verkleben oder in sonstwie geeigneter Weise erfolgen. Auch kann das U-Profil 21 in ein Anpressmittel 3 eingebettet werden.

Im Ausführungsbeispiel weisen das U-Profil 21 und das Anpressprofil übereinstimmende Rechteck-Querschnitte auf, so dass die Anpresseinheit 4 im Profilquerschnitt zumindest in etwa gleiche Eckabstände aufweist. Im Unterschied zu dem Niederhalter gemäß Fig. 1 und 2 ist der Klemmabschnitt 221 eines Niederhalters 22 mit einer Klemmkugel 27 versehen. Diese ist an dem Niederhalter 22 fest und befestigt. Sie greift in das U-Profil 21 des U-Trägers ein. Dadurch wird erreicht, dass der Niederhalter 22 unmittelbar an dem Tragelement 21 angreift und dennoch in verstellbare, unterschiedliche Winkelpositionen zur Ausrichtung auf das Befestigungselement 24 sowie zur Klemm-Keilbefestigung mit diesem gebracht werden kann. Dabei ist die Gelenkkugel 27 in dem U-Profil 21 verschiebbar bzw. in einem gewissen Raumwinkelbereich drehbar gelagert. Durch Klemm-/Anpressdruck wird sie in dem U-Profil 21 festgesetzt.

Die Ausführungsform gemäß Fig. 3 stellt gleichermaßen wie im Fall der Fig. 1 und 2 sicher, dass das Anpressmittel 3, gebildet durch ein weiches, federelastisches Schaummaterial, einerseits die Klemmvorspannung erzeugt und andererseits in Paarung und im Zusammenwirken mit der zu befestigenden Plane 5 die Abdichtung durch Ausgleichen von Unebenheiten herstellt.

Eine Reihe anderer Ausführungen der erfindungsgemäßen Einrichtung ist denkbar. Zum Beispiel kann statt des in Fig. 3 dargestellten U-Profils ein Voll-Profil vorgesehen werden. Ein solches balkenartiges Tragprofil ist in der Wahl des Materials nicht besonders eingeschränkt. Es kann zum Beispiel aus Holz, Kunststoff, Metall oder einem anderen Material gefertigt sein, das ausreichende Steifigkeit über die Befestigungsstrecke herstellt. Auf ein solches Profil können Niederhalter mit ihrem Klemmabschnitt in variierenden Positionen aufgesetzt werden, um zweckmäßig die beschriebene Verkeilungsverbindung mit Befestigungsstift herzustellen.

## Patentansprüche

1. Einrichtung zum abdichtenden Befestigen einer Abdeckplane (5) an flächigem Verankerungsgrund (6) längs einer dichtenden Befestigungsstrecke (11), umfassend eine an dem Verankerungsgrund (6) unter Erzeugung von Klemmkraft festsetzbare Klemmeinrichtung (1), die ein elastisches Anpressmittel (3) und ein demgegenüber steifes Klemmmittel (2) zum Befestigen der Abdeckplane (5) an dem Verankerungsgrund (6) längs der Befestigungsstrecke (11) aufweist, **dadurch gekennzeichnet, dass** wenigstens ein Element (21) des Klemmmittels (2) derart angeordnet und mit einem Anpressteil (31) des elastischen Anpressmittels (3) zusammengefügt ist, dass die zu befestigende Abdeckplane (5) längs der Befestigungsstrecke (11) im Klemmzustand der Einrichtung (1) zwischen das elastische Anpressteil (31) und den Verankerungsgrund (6) gepresst wird.

2. Einrichtung nach Anspruch 1, **dadurch gekennzeichnet, dass** das Klemmmittel (2) wenigstens einen mit dem Klemmelement (21) zusammenwirkenden Klemm-Niederhalter (22) mit einem Klemmabschnitt (221) aufweist, der im Klemmzustand der Einrichtung (1) das Klemmelement (21) zusammen mit wenigstens einem Teil des elastischen Anpressmittels (3) zwischen sich und der Abdeckplane (5) einklemmt.

3. Einrichtung nach Anspruch 2, **dadurch gekennzeichnet, dass** der Klemmabschnitt (221) eine zur Klemmverbindung angepasste, insbesondere konkave Form aufweist

4. Einrichtung nach einem der Ansprüche 1 bis 3, **dadurch gekennzeichnet, dass** der Niederhalter (22) eine quer zur Befestigungsstrecke gerichtete Klemmbrücke (222) aufweist, an der wenigstens ein Durchgangsloch (23, 25) zur Aufnahme eines an dem Verankerungsgrund (6) befestigbaren Stiftelements (24, 26) ausgebildet ist.

5. Einrichtung nach Anspruch 4, **dadurch gekennzeichnet, dass** zwischen der Klemmbrücke (222) und einem Befestigungsstift (24) eine Schiebe-Verkeilungsverbindung eingerichtet ist, die beim Herstellen des Klemmzustandes gegen federelastische Rückstellkraft des Materials des elastischen Anpressmittels (3) in eine den Klemmzustand aufrechterhaltende Verankerungsverbindung setzbar ist.

6. Einrichtung nach einem der Ansprüche 1 bis 5, **dadurch gekennzeichnet, dass** das mit dem elastischen Anpressteil (31) zusammengefügte Klemmelement (21) mit dem elastischen Anpressmittel (3) unverlierbar zu einer Anpresseinheit (4) zusammengefügt ist.

7. Einrichtung nach Anspruch 6, **dadurch gekennzeichnet, dass** das mit dem elastischen Anpressteil (31) zusammengefügte Klemmelement (21) durch ein entsprechend der Befestigungsstrecke sich erstreckendes Tragprofil gebildet ist, das das elastische Anpressmittel (3) trägt und mit diesem zusammen in einzelner oder mehrfacher Anordnung die Anpresseinheit (4) bildet.

8. Einrichtung nach Anspruch 7, **dadurch gekennzeichnet, dass** das die Abdeckplane (5) unmittelbar gegen den Verankerungsgrund (6) pressende elastische Anpressmittel (3) durch wenigstens ein Mantelteil (32) gebildet ist, das das Tragprofil (21) längs desselben vorzugsweise vollständig ummantelt.

9. Einrichtung nach Anspruch 8, **dadurch gekennzeichnet, dass** das Mantelteil (32) durch ein Hohlprofil vorzugsweise mit Kreisquerschnitt gebildet ist.

10. Einrichtung nach einem der Ansprüche 7 bis 9, **dadurch gekennzeichnet, dass** das Tragprofil (21) durch ein Tragrohr vorzugsweise mit Kreisquerschnitt gebildet ist.

11. Einrichtung nach einem der Ansprüche 7 bis 10, **dadurch gekennzeichnet, dass** das Klemmmittel (2) wenigstens einen Niederhalter (22) mit einer quer zur Befestigungsstrecke gerichteten Klemmbrücke (222) aufweist und dass der Niederhalter (22) zum Herstellen des Klemmzustandes der Einrichtung (1) unmittelbar mit dem Tragprofil (21) in gelenkigen und festklemmbaren, vorzugsweise durch ein Kugelgelenk gebildeten Eingriff gelangt.

12. Einrichtung nach Anspruch 11, **dadurch gekennzeichnet, dass** das Tragprofil (21) durch ein U-Profil gebildet ist, das wenigstens an der Außenseite seines Stegteils das elastische Anpressmittel (3) trägt, und dass zum Ausbilden des Kugelgelenks zwischen den Schenkelteilen des U-Profils eine Kugelaufnahme für eine Gelenkkugel (27) eingerichtet ist, die vorzugsweise an dem Niederhalter (22) befestigt ist.

13. Einrichtung nach einem der Ansprüche 1 bis 12, **dadurch gekennzeichnet, dass** das elastische Anpressmittel (3) durch ein weich-elastisches Material, vorzugsweise Moosgummi od. dgl. Material, gebildet ist.

14. Einrichtung nach einem der Ansprüche 1 bis 13, **dadurch gekennzeichnet, dass** die Klemm-Einrichtung (1) eine Befestigungslänge von 0,5 bis 5 m aufweist.

15. Einrichtung nach einem der Ansprüche 1 bis 14, **dadurch gekennzeichnet, dass** die Einrichtung (10) eine Mehrzahl Klemmeinrichtungen (1) aufweist, die längs einer dichtenden Befestigungsstrecke in wenigstens einer Reihe angeordnet sind.

16. Einrichtung nach Anspruch 15, **dadurch gekennzeichnet, dass** die Klemmeinrichtungen (1) zweckmäßig mit Überlappung in wenigstens zwei vorzugsweise parallelen Reihen angeordnet sind.

17. Einrichtung nach Anspruch 15 oder 16, **dadurch gekennzeichnet, dass** wenigstens eine Klemmeinrichtung als Eckstück zum Übereck-Verbinden von zwei Klemmeinrichtungen (1) ausgebildet ist.

18. Einrichtung nach einem der Ansprüche 1 bis 13, **dadurch gekennzeichnet, dass** das elastische Anpressmittel (3) an wenigstens einem stirnseitigen Ende der Klemmeinrichtung (1) über das wenigstens eine Element (21) des Klemmmittels (2) hervorsteht.

19. Einrichtung nach einem der Ansprüche 1 bis 18, **dadurch gekennzeichnet, dass** Anpresseinheiten (41, 42) von wenigstens zwei Klemmeinrichtungen (1) mit Aufnahmemittel (410, 411) und Steckmittel zum Herstellen einer Steckverbindung ausgebildet sind.

20. Einrichtung nach einem der Ansprüche 1 bis 19, **dadurch gekennzeichnet, dass** die Einrichtung zum abdichtenden Befestigen einer Dichtungsplane (5) für eine Hochwasserschutzeinrichtung ausgebildet ist.
